# EUROPÄISCHE PATENTSCHRIFT

(11) **EP 3 280 957 B1**
(45) Veröffentlichungstag und Bekanntmachung des Hinweises auf die Patenterteilung: **18.05.2022**
(21) Anmeldenummer: 16719522.1
(22) Anmeldetag: 08.04.2016
(51) Int. Cl.: F24S 20/20, F28D 20/00

(54) **PROZESSSYSTEM FÜR DIE REKUPERATION VON WÄRME UND VERFAHREN ZU DESSEN BETRIEB**
PROCESSING SYSTEM FOR RECOVERING HEAT, AND A METHOD FOR OPERATING SAME
SYSTÈME DE TRAITEMENT POUR LA RÉCUPÉRATION DE CHALEUR ET PROCÉDÉ PERMETTANT DE FAIRE FONCTIONNER LEDIT SYSTÈME

(30) Priorität: 08.04.2015 CH 4872015
(43) Veröffentlichungstag der Anmeldung: 14.02.2018
(73) Patentinhaber: Synhelion SA, 6900 Lugano (CH)
(72) Erfinder: PEDRETTI - RODI, Andrea, 6500 Bellinzona (CH)
(74) Vertreter: Stump, Beat
(86) Internationale Anmeldenummer: PCT/IB2016/052000
(87) Internationale Veröffentlichungsnummer: WO 2016/162839

(56) Entgegenhaltungen:
- WO-A1-2014/062464
- DE-A1- 10 260 992
- DE-A1-102008 036 527
- DE-A1-102010 053 902
- US-A- 5 237 827
- US-A1- 2005 126 170
- US-A1- 2013 049 368

## Beschreibung

Die vorliegende Erfindung betrifft ein Prozesssystem mit einer zwischen einer oberen und einer unteren Temperatur betreibbaren Prozesseinheit gemäss dem Oberbegriff des Anspruchs 1 und ein Verfahren zum zyklischen Erwärmen und Kühlen einer zwischen einer oberen und einer unteren Temperatur betreibbaren Prozesseinheit gemäss Anspruch 1.

Prozesse, die auf verschiedenen Temperaturniveaus ablaufen, sind in der Technik weit verbreitet. Dabei findet ein Prozessschritt auf einer oberen Temperatur und ein anderer Prozessschritt auf einer unteren Temperatur statt, oder auch es findet ein Prozessschritt während der Temperaturänderung statt. Viele Anwendungen betreffend den Fall, dass eine chemische Reaktion mit Hilfe eines Katalysators abläuft. Häufig ist es dann sinnvoll, eine Prozesseinheit in einen oberen Temperaturbereich zu erwärmen und danach in einen unteren Temperaturbereich abzukühlen und diesen Temperaturwechsel zyklisch für fortlaufende Produktion zu wiederholen.

Einer der zahlreichen Anwendungsfälle liegt im Bereich der Herstellung solarer Brennstoffe (solar fuels), deren Ausgangsstoffe H₂ (Wasserstoff) und CO (Kohlenmonoxid) unter Zufuhr von Energie - namentlich Wärme bei hohen Temperaturen- aus H₂O (Wasser) und CO₂ (Kohlendioxid) gebildet werden. Ein Gasgemisch, welches hauptsächlich H₂ und CO -neben weiteren Gasen- enthält, nennt man Synthesegas oder einfach Syngas. Dieses Syngas dient der Herstellung von flüssigen oder gasförmigen Kohlenwasserstoff-Treibstoffen.

In der DE 10 2010 053 902 wird offenbart, ein Receiver-Reaktor einzusetzen, der zwischen einem Heiss- und einem Kaltwärmespeicher angeordnet ist, so dass der Receiver-Reaktor für die vorgesehene chemische Reaktion auch bei Nachtbetrieb einsatzfähig ist.

In einer ETH Dissertation No. 21864 "SOLAR THERMOCHEMICAL CO2 AND H2O SPLITTING VIA CE-RIA REDOX REACTIONS" von Philipp Furler wird ein experimenteller, solarer Cerium-Reaktor beschrieben, mit welchem unter Einstrahlung von konzentriertem Sonnenlicht (2865 Sonnen, d.h. einer thermischen Strahlung von bis zu 2865 kW/m²) Synthesegas herstellbar ist.

Sonnenlicht in oben erwähnter Konzentration kann auf industrieller Basis beispielsweise mit einem Dish-Konzentrator der Anmelderin gemäss der WO 2011/072410 erzeugt werden, so dass die kommerzielle Produktion von Synthesegas unter Verwendung von erneuerbarer bzw. regenerierbarer Energie realistisch geworden ist.

Gemäss der oben erwähnten ETH Dissertation wird in einem ersten, endothermischen Prozessschritt bis zu einer oberen Temperatur von 1800 K Cerium unter Bildung von Sauerstoff reduziert; anschliessend wird das Cerium nach dem Abschluss der Reduktion auf eine untere Temperatur von 1100 K gekühlt und in einem nachfolgenden Prozessschritt das Synthesegas durch exothermisches Re-oxidieren produziert; dabei ist die endothermisch benötigte Wärme viel grösser als die exothermisch anfallende Wärme. Dieser Prozess kann für eine fortlaufende Produktion von Synthesegas zyklisch wiederholt werden; hierfür muss das Cerium konsequenterweise periodisch auf 1800 K erwärmt werden und auf 1100 K abgekühlt werden. Für eine Rekuperation von durch die Abkühlung entnommener Wärme wird eine Doppel-Ringkonstruktion eines Cerium-Trägers vorgeschlagen. Zwei gegenläufig drehende, aneinander anliegende Cerium-Ringe mit gemeinsamer Rotationsachse liegen zwischen der warmen Zone (1800 K) und der kalten Zone (1100 K) derart, dass sich ein Abschnitt eines jeden Ringes in der warmen Zone auf einer 12-Uhr-Position und ein gegenüberliegender Abschnitt in der kalten Zone auf einer 6-Uhr-Position befindet. Durch eine gegenläufige Drehung unmittelbar benachbarter Cerium-Ringe wandert der kalte Abschnitt eines ersten Cerium-Rings im Uhrzeigersinn in Richtung der warmen Zone und der warme Abschnitt in Richtung der kalten Zone und bei einem zweiten, sich gegen den Uhrzeigersinn drehenden Cerium-Ring wandert ebenfalls der kalte Abschnitt in Richtung der warmen Zone und der warme Abschnitt in Richtung der kalten Zone, wobei beide Cerium-Ringe aneinander vorbei streifen und dadurch laufend Wärmenergie tauschen. Entsprechend werden gegenseitig warme Abschnitte gekühlt und kalte Abschnitte erwärmt, was eine Rekuperation einer Wärmemenge ermöglicht. Der Wirkungsgrad der Rekuperation ist jedoch konstruktionsbedingt klein und liegt etwa bei 25%. Die Anforderungen an die Konstruktion und die Standfestigkeit gegenläufig rotierender, aneinander anliegender Cerium-Ringe -Wärmeübergang, Wärmeabstrahlung und mechanischer Aufwandsind gross.

Ähnliche Probleme, wie sie oben beschrieben sind, ergeben sich auch in anderen Gebieten des Stands der Technik, wenn eine Prozesseinheit auf verschiedenen Temperaturen betrieben werden soll, und die bei der Kühlung entnommene Wärme rekuperiert werden soll.

Der Erfindung liegt deshalb die Aufgabe zugrunde, ein Prozesssystem mit einer zwischen einer oberen und einer unteren Temperatur betreibbaren Prozesseinheit dahingehend weiterzubilden, dass Wärme besser rekuperiert werden kann. Das Prozesssystem soll unter anderem auch für Temperaturen über 1000 K verwendet werden können, so dass die Prozesseinheit als Reaktor, beispielsweise als Reaktor für Synthesegas, ausgebildet ist.

Die der Erfindung zugrunde liegende Aufgabe für das Prozesssystem wird durch die Merkmale des Anspruchs 1 gelöst. Dadurch, dass zwei Wärmespeicher vorgesehen sind, zwischen denen die Prozesseinheit liegt, kann ein Wärmespeicher für die Erwärmung der Prozesseinheit entladen und von der Prozesseinheit nicht aufgenommene Wärme zur Beladung des zweiten Wärmespeichers verwendet werden -analog bei der Kühlung der Prozesseinheit. Dies erlaubt, die Verluste zu senken und damit den Wirkungsgrad zu erhöhen.

Die der Erfindung zugrunde liegende Aufgabe wird auch durch das Verfahren gemäss Anspruch 11 gelöst. Dadurch, dass die Strömungsrichtung zwischen den Wärmespeichern, und damit durch die Prozesseinheit hindurch, zyklisch wechselt, kann die im System vorhandene Wärme wechselweise hin- und her geschoben werden, durch die Prozesseinheit hindurch, diese dabei wechselweise erwärmend und kühlend, was neben einem verbesserten Wirkungsgrad auch eine vereinfachte Bauweise erlaubt des Prozessystems erlaubt.

Die der Erfindung zugrunde liegende Aufgabe für das Verfahren wird durch die Merkmale des Anspruchs 11 gelöst. Dadurch, dass die Strömungsrichtung zwischen den Wärmespeichern, und damit durch die Prozesseinheit hindurch, zyklisch wechselt, kann die im System vorhandene Wärme wechselweise hin- und her geschoben werden, durch die Prozesseinheit hindurch, diese dabei wechselweise erwärmend und kühlend, was neben einem verbesserten Wirkungsgrad auch eine vereinfachte Bauweise erlaubt.

Im Folgenden wird die Erfindung anhand von Figuren beispielhaft erläutert. Gleiche Gegenstände sind in den Figuren grundsätzlich mit gleichen Bezugszeichen bezeichnet. Es zeigt:
Fig. 1 eine schematische Darstellung des erfindungsgemässen Prozesssystems mit einer Reihenschaltung eines Wärmespeichers, einer Prozesseinheit und eines weiteren Wärmespeichers,
Fig. 2 einen Temperaturverlauf der Prozesseinheit,
Fig. 3 eine bevorzugte Ausführungsform eines geschichteten Wärmespeichers mit Diagrammen über die in ihm herrschende Temperaturverteilung im Betrieb,
Fig. 4 eine bevorzugte Ausführungsform eines erfindungsgemässen Prozessystems mit geschichteten Wärmespeichern mit Diagrammen über die im Prozesssystem herrschende Temperaturverteilung im Betrieb,
Fig. 5 die Ausführungsform des Prozesssystems von Figur 4 mit Diagrammen über die im Prozesssystem herrschende Temperaturverteilung in einer alternativen Betriebsform,
Fig. 6 eine schematische Darstellung einer weiteren Ausführungsform des erfindungsgemässen Prozesssystems mit einem dritten Wärmespeicher für externe Wärme,
Fig. 7a bis 7d das Prozessystem von Figur 6 in vier verschiedenen Schaltzuständen, und
Fig. 8 eine Ansicht der warmen Seite eines realisierten Prozessystems gemäss Figur 6.

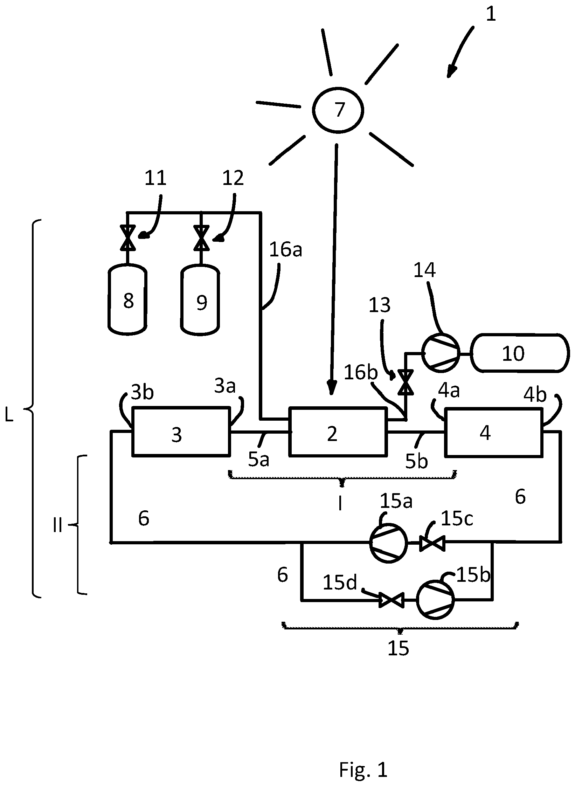

Fig. 1 zeigt ein erfindungsgemässes Prozesssystem 1, mit einer zwischen einer oberen und einer unteren Temperatur betreibbaren Prozesseinheit 2, wobei ein erster 3 und ein zweiter Wärmespeicher 4 durch eine Leitungsanordnung L für ein Wärme transportierendes Medium betriebsfähig miteinander verbunden sind, und wobei die Prozesseinheit 2 in einem ersten Abschnitt I der Leitungsanordnung zwischen dem ersten 3 und dem zweiten Wärmespeicher 4 angeordnet ist. Dadurch besitzt jeder der Wärmespeicher 3, 4 ein der Prozesseinheit 2 zugewandtes Ende 3a, 4a und ein dieser abgewandtes Ende 3b, 4b sowie der erste Abschnitt I der Leitungsanordnung die Leitungsabschnitte 5a, 5b, welche die Wärmespeicher 3, 4 mit der Prozesseinheit 2 verbinden.

In der gezeigten Ausführungsform der Erfindung ist die Prozesseinheit 2 als Cerium-Reaktor ausgebildet, der für die in der ETH Dissertation No. 21864 beschriebenen Reaktionen geeignet ist. Dazu ist er eingangsseitig via eine Leitung 16a über ein Ventil 11 mit einem CO₂-Tank 8 und über ein Ventil 12 mit einem H₂O-Tank 9 verbunden und ausgangsseitig via eine Leitung 16b über ein Ventil 13 und eine Pumpe 14 mit einem Syngas-Tank 10, in welchem ein Gasgemisch hauptsächlich bestehend aus CO und H₂ als Endprodukte gesammelt wird.

Weiter ist ersichtlich, dass der erste 3 und der zweite Wärmespeicher 4 auf der jeweiligen, der Prozesseinheit 2 abgewandten Seite 3b, 4b mittels einem zweiten Abschnitt II der Leitungsanordnung L über deren Leitung 6 verbunden sind. Durch die beiden Abschnitte I und II der Leitungsanordnung L ergibt sich ein Kreislauf des in dieser fliessendem Wärme transportierenden Mediums, welches beispielsweise Argon sein kann, das auch für den Wärmetransport bei hohen Temperaturen geeignet ist.

Eine Pumpenanordnung 15 erlaubt, die Strömungsrichtung des Wärme transportierenden Mediums in beiden Richtungen des Kreislaufs aufrecht zu erhalten und diese bei Bedarf umzukehren. Die Pumpenanordnung 15 ist hier der Einfachheit halber mit zwei Pumpen 15a und 15b dargestellt, die über Ventile 15c und 15c in den Kreislauf geschaltet oder von diesem abgekoppelt werden können. Natürlich kann der Fachmann im konkreten Fall die Pumpenanordnung 15 den Bedürfnissen entsprechend auslegen.

An dieser Stelle sei angemerkt, dass in einer weiteren, nicht dargestellten Ausführungsform der Leitungsabschnitt II auch weggelassen werden kann. Beispielsweise sind dann die Wärmespeicher 3, 4 an ihren der Prozesseinheit 2 abgewandten Seiten 3b, 4b offen, d.h. mit der Umgebung verbunden, so dass das Wärme transportierende Medium Umgebungsluft sein kann, welche durch die Wärmespeicher 3, 4, die Prozesseinheit 2 und damit durch den Leitungsabschnitt I strömt. Der Fachmann wird hier ebenfalls nach dem konkreten Fall (Ausbildung der Porzesseinheit für einen beliebigen industriellen Prozess mit der entsprechenden oberen und unteren Temperatur) den dargestellten geschlossenen Kreislauf oder eine offene Anordnung wählen. Schliesslich ist es möglich, an den abgewandten Seiten der Prozesseinheit 2 an Stelle des Leitungsabschnitts II je Tanks für das Wärme transportierende Medium vorzusehen, so dass dann ein anderes Medium als Umgebungsluft einsetzbar ist.

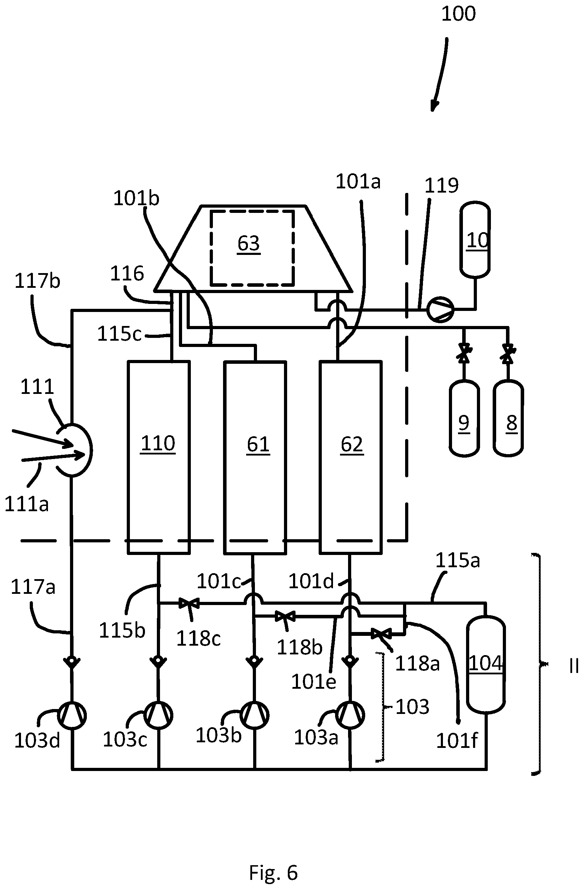

Wie oben erwähnt ist die Prozesseinheit 2 in der in der Figur gezeigten Ausführungsform als Cerium-Reaktor ausgebildet, der hier zyklisch mit einer unteren Temperatur im Bereich von beispielsweise 1300 °K und einer oberen Temperatur im Bereich von beispielsweise 1800 °K betrieben wird (auch hier kann der Fachmann im konkreten Fall alle Parameter entsprechend dem gewählten Prozess leicht bestimmen). Entsprechend muss der Reaktor fortlaufend erwärmt und dann wieder gekühlt werden. Erfindungsgemäss wird bei der Kühlung des Reaktors aus diesem abtransportierte Wärme vorbestimmt in einem der Wärmespeicher 3, 4 gespeichert und zur nachfolgenden (Wieder)Erwärmung eingesetzt, somit rekuperiert. Ein Wirkungsgrad von 100% ist nicht möglich, mit der Folge, dass dem Reaktor bei der Erwärmung in einem oberen Temperaturbereich bis zur oberen Temperatur (hier 1800 °K) Wärme von aussen zugeführt werden muss, beispielsweise durch die Sonne 7, welche die Prozesseinheit 2 (hier den Cerium-Reaktor) beleuchtet, oder auch mittelbar über einen weiteren, zur Entlastung der Figur hier nicht dargestellten Wärmespeicher, der seinerseits durch Sonnenenergie (oder durch anders gewonnene Wärme) beladen wird (s. dazu unten, Figur 6). Somit ist hier bei der gezeigten Ausführungsform die Prozesseinheit 2 als ein von der Sonne 7 beleuchteter, mit Ceroxid (CeO2) gefüllter Solarreaktor ausgebildet.

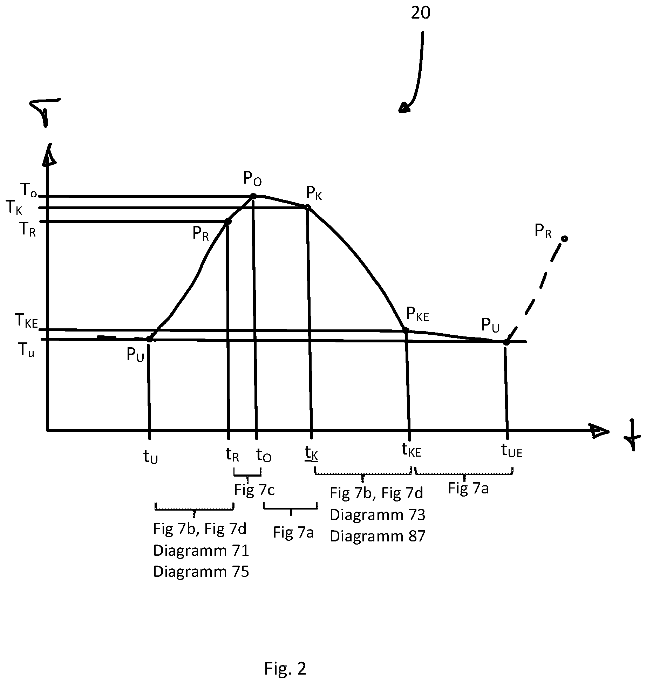

Figur 2 zeigt qualitativ ein Diagramm mit einem Temperaturverlauf in der als Cerium-Reaktor ausgebildeten Prozesseinheit 2 (Figur 1), deren Betriebstemperatur zwischen der unteren Temperatur T_{U} (hier 1300 ⁰K) und der oberen Temperatur T_{O} (hier 1800 ⁰K) wechselt.

Zur Zeit t_{U} beginnt, abgesehen von einem Startvorgang, die Erwärmung des sich auf der unteren Temperatur T_{U} befindenden Reaktors durch rekuperierte Wärme aus den Wärmespeichern 3, 4 (Figur 1). Dadurch steigt die Reaktortemperatur auf T_{R} (die durch die Rekuperation erreichbare Temperatur) an, welche zur Zeit t_{R} erreicht ist. Für die weitere Erwärmung auf T_{O} (erreicht zur Zeit tₒ) wird zusätzliche Wärme benötigt, die extern zugeführt werden muss, wie oben erwähnt beispielsweise durch die Beleuchtung des Reaktors durch die Sonne. Die Temperaturkurve läuft damit durch die Punkte P_{U}, P_{R} und P_{O}, wobei der Wirkungsgrad der Rekuperation durch das Verhältnis der Flächen unter den Kurvenabschnitten P_{U} bis P_{R} und P_{R} bis Pₒ gegeben ist.

Während der Erwärmung des Reaktors von T_{U} auf T_{O} wird das Cerium reduziert, O₂ wird frei und laufend durch eine zur Entlastung von Figur 1 nicht dargestellte Leitung aus dem Reaktor abgeführt. Nach dem Erreichen von T_{O} sind allenfalls noch Spuren von O₂ im Reaktor vorhanden, der während der kurzen Verweilzeit im oberen Temperaturbereich durch Wärmeverluste leicht auf die Temperatur T_{K}, dem Beginn der Kühlung des Reaktors, abkühlt. Die dem Reaktor bis zum Ende der Abkühlung auf die Temperatur T_{KE} zur Zeit t_{KE} entnommene Wärme wird in den Wärmespeichern 3, 4 gespeichert. Sobald der Reaktor die Temperatur T_{KE} erreicht hat, wird durch die Leitung 16 (Figur 1) O₂ und H₂O (vorzugsweise dampfförmig) in den Reaktor eingespiesen, wobei durch Re-Oxidation des Ceriums das Synthesegas gebildet und über die Leitung 16b (Figur 1) in den Syngas-Tank geführt wird. Während der Re-Oxidation kühlt der Reaktor weiter leicht ab auf die Temperatur T_{U}, die zur Zeit t_{UE} erreicht ist.

Danach kann der Zyklus neu beginnen. Für die Wärmespeicher 3,4 gilt dabei, dass ihre Betriebstemperatur T_{B}, d.h. die maximale Temperatur der in ihnen gespeicherten Wärme, zwischen T_{K} und T_{R} liegt, da zwischen dem Wärme tauschenden Medium und dem Reaktor bzw. den Wärmespeichern eine gewisse Temperaturdifferenz unvermeidlich ist.

Gemäss Figur 1 erfolgt die Abkühlung des Reaktors, indem kälteres Wärme transportierendes Medium beispielsweise aus dem ersten Wärmespeicher 3 über den Leitungsabschnitt 5a in den Reaktor (Prozesseinheit 2) geführt, dort erwärmt und über den Leitungsabschnitt 5b weiter in den zweiten Wärmespeicher 4 geführt wird, welcher dadurch beladen wird und bei umgekehrter Strömungsrichtung Wärme für die Erwärmung des Reaktors abgeben kann, was zyklisch immer wieder neu ablaufen kann.

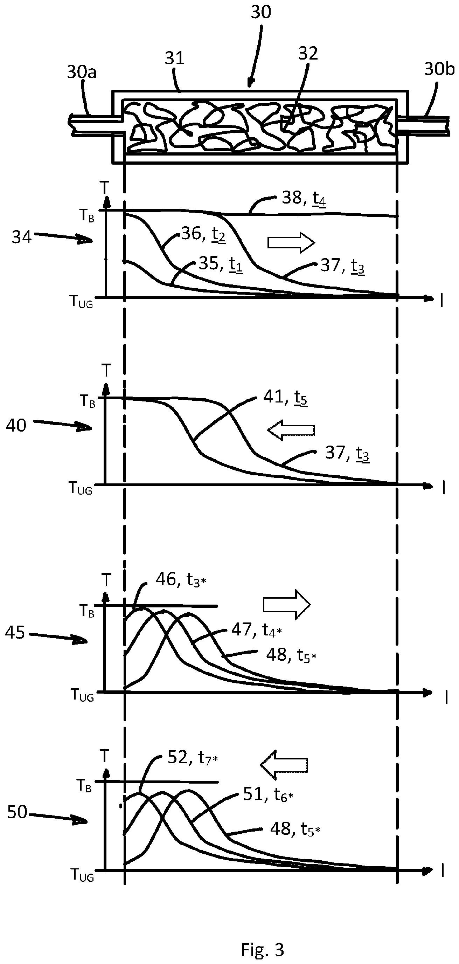

Ein besonders günstiger Wirkungsgrad der Rekuperation lässt sich erreichen, wenn gemäss der Erfindung der erste 3 und der zweite Wärmespeicher 4 als geschichtete Wärmespeicher ausgebildet sind, d.h., Wärmespeicher, die mit einer definierten Temperaturverteilung betrieben werden können, um so erfindungsgemäss auf einfache Weise einen besonders hohen Wirkungsgrad und eine einfache, auch kostengünstige Bauform zu realisieren. Figur 3 zeigt schematisch eine bevorzugte Ausführungsform eines geschichteten Wärmespeichers 30, also einen Wärmespeicher, der im Betrieb eine Temperaturschichtung mit einem vorbestimmten Temperaturprofil ausbilden kann, wie dies nachstehend beschrieben ist. Der hier gezeigte Wärmespeicher 30 weist im Wesentlichen eine langestreckte, isolierende Ummantelung 31 und eine Wärme speichernde Füllung 32 aus Schüttgut wie etwa Kies oder beispielsweise feineres bzw. gröberes Gestein (oder auch andere geeignete Materialien) auf. An seinen Enden münden Leitungen 30a und 30b für ein Wärme transportierendes Medium, hier ein Gas wie Umgebungsluft oder beispielsweise auch, im Fall hoher Betriebstemperaturen, Argon. Das Gas bzw. Argon strömt durch die im Schüttgut vorhandenen Zwischenräume längs durch den Wärmespeicher 30 und gibt so Wärme an das Schüttgut ab oder nimmt Wärme von ihm auf, je nachdem, ob der Wärmespeicher 30 mit Wärme beladen oder entladen werden soll.

Weiter zeigt Figur 3 Diagramme 34, 40,45 und 50 mit je nach aktuellem Betriebszustand verschiedenen Temperaturverteilungen über die Länge des Wärmespeichers 30, wobei das Temperaturintervall von einer Umgebungstemperatur T_{UG} bis zu einer Betriebstemperatr T_{B} reicht. Dargestellt sind die Betriebszustände bei verschiedener Strömungsrichtung des Gases bzw. Argon, einmal von der Leitung 30a zur Leitung 30b, d.h. nach rechts, und dann umgekehrt von der Leitung 30b zur Leitung 30a, d.h. nach links, entsprechend der in den Diagrammen eingezeichneten Pfeilrichtung.

Diagramm 34 zeigt die Temperaturverteilung des sich zuerst auf der Umgebungstemperatur T_{UG} befindenden Wärmespeichers 30 während der Beladung mit Wärme, wofür er von einem Gas mit einer Betriebstemperatr T_{B} nach rechts, in Pfeilrichtung, durchströmt wird.

Ersichtlich sind vier Temperaturverteilungskurven 35 bis 38 entsprechend der fortschreitenden Beladungszeiten t₁ bis t₄. Zu Beginn der Beladung heizt sich das am Eingang des Wärmespeichers 30 sich befindende Schüttgut 32 auf, wodurch das Gas an Temperatur verliert, so dass die nachfolgenden Partien des Schüttguts 32 entsprechend weniger und die später folgenden Partien des Schüttguts 32 auf Grund des steten Temperaturverlusts des Gases noch weniger aufgeheizt werden. Es ergibt sich zur Zeit t₁ eine in Strömungsrichtung stufenartig abfallende Temperaturverteilung gemäss der Kurve 35. Durch die weiter andauernde Beladung entsteht die stufenartige Temperaturverteilung gemäss der Kurve 36 (Zeit t₂), d.h. die Stufe gewinnt an Höhe mit der steigenden Temperatur des Schüttguts 32 am Eingang des Wärmespeichers 30, wobei sich die Stufe nur wenig in Strömungsrichtung verschiebt. Schliesslich hat das Schüttgut zur Zeit t₃ eingangsseitig die Betriebstemperatur T_{B} des Gases erreicht, so dass bei weiterer Beladung die Stufe in Strömungsrichtung durch das Schüttgut 32 läuft, s. die Kurve 37 zur Zeit t₄. Es ist mit anderen Worten so, dass im Speicher während der Beladung eine Temperaturstufe oder -rampe entsteht, die sich zu Beginn der Beladung aufbaut (Kurven 35 und 36) und sich dann während der weiteren Beladung in Stömungsrichtung verschiebt (Kurve 37), bis sie das andere Ende des Wärmespeichers 30 erreicht und durch dieses gewissermassen hindurchgewandert ist, so dass der zur Zeit t₄ voll beladene Wärmespeicher 30 eine Temperaturverteilung gemäss der Kurve 38 auf dem Niveau der Betriebstemperatr T_{B} aufweist. Es sei angemerkt, dass das mit der Betriebstemperatr T_{B} einströmende Gas den Wärmespeicher auf der unteren Umgebungstemperatur T_{UG} verlässt bis die Stufe dessen Ausgang (hier bei der Leitung 30b) erreicht.

Figur 3 zeigt im Diagramm 40 die Temperaturverteilung, wenn zur Zeit t₃ die Beladung gestoppt und danach der Wärmespeicher 30 entladen wird, indem in umgekehrter Strömungsrichtung ein Gas auf der Umgebungstemperatur T_{UG} von der Leitung 30b her durch den Wärmespeicher 30 hindurchgeführt wird. Die Beladung wird, wie erwähnt, gestoppt zur Zeit t₃, die Wärmeverteilung entspricht damit der Kurve 37. Zur Zeit t₄ hat sich die Temperaturstufe nach links verschoben, die Wärmeverteilung entspricht der Kurve 41. Es sei angemerkt, dass das mit der Umgebungstemperatur T_{UG} einströmende Gas den Wärmespeicher auf der Betriebstemperatr T_{B} verlässt, bis die Stufe dessen Ausgang (hier bei der Leitung 30a) erreicht.

Figur 3 zeigt im Digramm 45 die Temperaturverteilung im Wärmespeicher 30, wenn bei erst teilweiser Beladung (aber immer noch in Strömungsrichtung nach rechts, also von der Leitung 30a zur Leitung 30b, s. die Pfeilrichtung) die Temperatur des einströmenden Gases von T_{B} aus abfällt, beispielsweise auf T_{UG}, hier zur Zeit t₂ von Diagramm 34, d.h. nachdem eine Temperaturverteilung gemäss der Kurve 37 von Diagramm 40 vorliegt.

Das eingangsseitige Schüttgut erwärmt damit das mit T_{UG} einströmende Gas auf die Betriebstemperatur T_{B} und kühlt sich dabei etwas ab, wobei aber das nun auf T_{B} erwärmte Gas nach rechts weiter fliesst und den unmittelbar dahinter liegenden Bereich des Schüttguts 32 entsprechend auf T_{B} erwärmt, dabei aber Wärme verliert, so dass ein noch weiter hinter liegender Bereich des Schüttguts 32 immer noch, aber auf eine tiefere Temperatur, erwärmt wird, und so fort, was zur Zeit t₃∗ eine Temperaturverteilung gemäss der Kurve 46 ergibt. Das nach wie vor mit der Temperatur T_{UG} einströmende Gas kühlt das eingangsseitige Schüttgut 32 weiter ab, nimmt aber dessen Wärme auf und transportiert sie in Strömungsrichtung weiter - es entsteht zur Zeit t₄∗ die Temperaturverteilung gemäss der Kurve 47 und bei fortdauernd einströmendem Gas auf der Temperatur T_{UG} zur Zeit t₅∗ die Temperaturverteilung gemäss der Kurve 48. Es ist mit anderen Worten so, dass sich die Temperaturverteilung nicht mehr als Stufe, sondern als Welle ausbildet, die in Strömungsrichtung durch den Wärmespeicher 30 hindurchläuft. Es sei angemerkt, dass bei diesem Betriebszustand das Gas das mit der unteren Temperatur T_{UG} ein- und ausströmt, während sich die Welle ausbildet und in Strömungsrichtung durch den Wärmespeicher 30 läuft, bei fortschreitender Zeit so lange, bis die Welle den Ausgang bei der Leitung 30b erreicht, wobei erst dann eine Entladung des Wärmespeichers 30 einsetzt, die solange dauert, bis die Welle vollständig durch die Leitung 30b "hindurch" gelaufen ist.

Hervorgehoben sei, dass sich Wellen verschiedenster Form ausbilden lassen, beispielsweise je nach dem, wie die in den Wärmespeicher einströmende Temperatur geändert wird. Nachstehend wird für alle dies möglichen Wellenformen einfach der Begriff "Welle" verwendet.

Figur 3 zeigt im Diagramm 50 die Temperaturverteilung im Wärmespeicher 30, wenn im Moment der Temperaturverteilung gemäss der Kurve 48 (Diagramm 40) zur Zeit t₅∗ die Strömungsrichtung umgekehrt wird, so dass das Gas dann (nach wie vor auf der unteren Temperatur T_{UG}) nun von der Leitung 30b zur Leitung 30a nach links fliesst, s. die Pfeilrichtung.

Als Ausgangslage im Moment der Umkehrung der Strömungsrichtung existiert, wie erwähnt, die Temperaturverteilung gemäss Kurve 48 zur Zeit t₅∗, wobei aber nun die Welle der umgekehrten Strömungsrichtung entsprechend nach links wandert, hin zur Leitung 30a. Es folgt, eine Zeitspanne nach der Umkehrung der Strömungsrichtung, die Temperaturverteilung gemäss der Kurve 51 zur Zeit t₆∗ und danach diejenige gemäss der Kurve 52 zur Zeit t₇∗. Es sei angemerkt, dass während der im Diagramm 50 gezeigten Entladung des Wärmespeichers 30 das Gas auf der Umgebungstemperatur T_{UG} einströmt und zuerst ebenfalls auf der Umgebungstemperatur T_{UG} ausströmt, solange, bis die vorangehende Temperaturflanke der Welle die Leitung 30a erreicht hat, wobei sich dann der ansteigenden Flanke der Welle entsprechend die Temperatur bis auf die Betriebstemperatr T_{B} erhöht und dann der nachfolgenden, absteigenden Flanke entsprechend wieder abfällt, bis der Wärmespeicher 30 vollständig entladen ist.

Der Wärmespeicher 30 besitzt im geeigneten Betrieb, d.h. im Betrieb mit nur teilweiser Beladung auch bei fortlaufender Durchströmung durch das Wärme transportierende Gas eine warme Seite und eine kalte Seite, s. die Diagramme 34 und 40 von Figur 3, wobei die kalte Seite hier im Wesentlichen auf der Umgebungstemperatur T_{UG} verbleibt, obschon die warme Seite die Betriebstemperatr T_{B} erreicht. Dies gilt ebenfalls für den Betrieb mit einer Welle gemäss den Diagrammen 45 und 50, wenn die Welle nur soweit in den Wärmespeicher 30 hinein verschoben wird, dass die warme Seite des Wärmespeichers noch nicht auf die untere Temperatur gefallen ist (beispielsweise bis zur Wärmeverteilung nach der Kurve 47 in Diagramm 45).

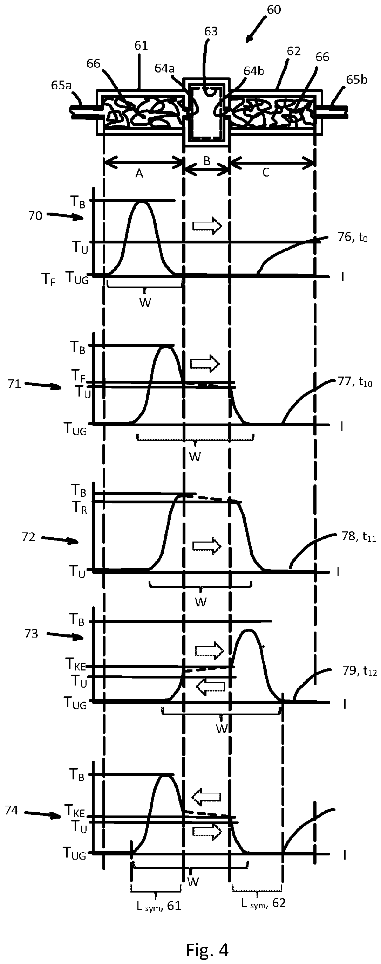

Figur 4 zeigt ein erfindungsgemässes Prozesssystem 60 mit zwei geschichteten Wärmespeichern 61, 62 die gemäss Figur 3 ausgebildet sind, damit ein Wärme speicherndes Schüttgut 66 enthalten. Zwischen dem ersten Wärmespeichern 61 und dem zweiten Wärmespeicher 62 ist eine nur gestrichelt angedeutete, hier als Cerium-Reaktor 63 ausgebildete Prozesseinheit angeordnet, wobei die Leitungsabschnitte 64a und 64b eines ersten Abschnitts I der Leitungsanordnung L (Figur 1) ersichtlich sind, welche den Cerium-Reaktor 63 mit den Wärmespeichern 61,62 betriebsfähig verbindet. Weiter dargestellt sind die Mündungen 65a und 65b der zur Entlastung der Figur nicht dargestellten Leitung 6 des zweiten Abschnitts II der Leitungsanordnung L (Figur 1), welche den Kreislauf des Wärme transportierenden Mediums (hier wiederum Argon) ermöglichen, in beiden Strömungsrichtungen, nämlich nach rechts von der Mündung 65a zur Mündung 65b und umgekehrt nach links von der Mündung 65b zur Mündung 65a.

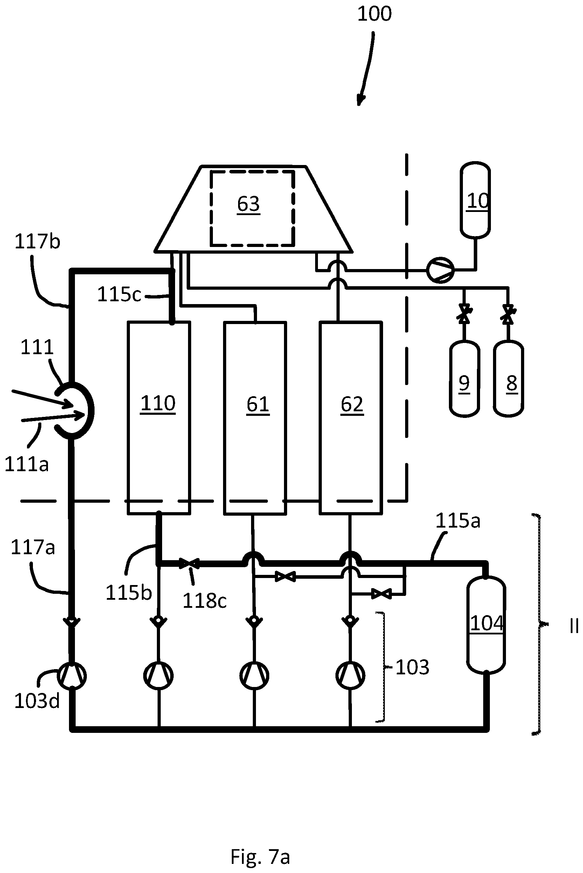

Durch den Betrieb des Prozesssystems 60 wird nun der Cerium-Reaktor 63 gemäss Figur 2 zyklisch zwischen einer oberen Temperatur T_{O} und einer unteren Temperatur T_{U} hin- und her gebracht, wobei in den Diagrammen 70 bis 74 der Wärmetausch zwischen dem ersten 61 und zweiten Wärmespeicher 62 und dem Reaktor 63 gezeigt ist, aber zur Verdeutlichung der Wechselwirkung zwischen den Wärmespeichern vorerst ohne die externe (solare) Wärmezufuhr zwischen der Rekuperationstemperatur T_{R} und der oberen Temperatur T_{O} (s. das Diagramm 20, Figur 2) sondern ausgehend von der T_{R} zwischen T_{O} und liegenden Betriebstemperatur T_{B} der Wärmespeicher 61,62. Im Hinblick auf die externe Wärmezufuhr s. unten, zu den Figuren 6 und 7a bis 7d.

Die Diagramme 70 bis 74 zeigen Temperaturverteilungskurven 76 bis 80 von verschiedenen Betriebszuständen der Anordnung aus dem Cerium-Reaktor 63 mit dem ersten 61 und dem zweiten Wärmespeicher 62, wobei die Abschnitte A, B und C jeweils den Bereich bzw. die Länge in Durchströmrichtung des Wärme transportierenden Mediums des ersten Wärmespeichers 61, des Cerium-Reaktors 63 und des zweiten Wärmespeichers 62 anzeigen.

Im Diagramm 70 zeigt die Temperaturverteilungskurve 76 nach einem ersten Teil eines Startvorgangs des Prozesssystems 60 zur Zeit t₀. Der erste Wärmespeicher 61 ist so mit Wärme beladen, dass eine Temperaturwelle W mit einer Spitzentemperatur T_{B} vorliegt, wobei die Flanken der Welle W auf die Umgebungstemperatur T_{UG}, hier beispielsweise 300 °K, abfallen. Der Cerium-Reaktor 63 und der zweite Wärmespeicher 62 befinden sich noch auf die Umgebungstemperatur T_{UG}. Für den zweiten Teil des Startvorgangs strömt Argon auf Umgebungstemperatur T_{UG} von der Mündung 65a nach rechts durch den ersten Wärmespeicher 61, den Cerium-Reaktor 63 und den Wärmespeicher 62 in die Mündung 65b, s. die Pfeilrichtung in Diagramm 70, mit der Folge, dass sich die Welle W in Strömungsrichtung nach rechts bewegt, wie dies zum Diagramm 45, Figur 3 beschrieben ist.

Diagramm 71 zeigt die Temperaturverteilungskurve 77 zur Zeit t₁₀, wobei sich die Temperaturwelle W in Strömungsrichtung so weit nach rechts verschoben hat, dass sie mit der vorangehenden Flanke an den Cerium-Reaktor 63 angestossen und durch diesen teilweise hindurchgelaufen ist, d.h. das Argon hat den Cerium-Reaktor 63 mit einer ansteigenden, zwischen T_{UG} und T_{B} liegenden Temperatur T_{F} der Flanke durchströmt und diesen entsprechend erwärmt.

Dadurch, dass die Temperaturwelle W von T_{UG} aus mit ansteigender Flankentemperatur T_{F} in den Cerium-Reaktor 63 eindringt, erwärmt sie diesen laufend, so dass die Temperaturdifferenz von T_{F} und derjenigen des Reaktors 63 stets klein bleibt. Natürlich verliert dadurch das Argon etwas an Wärme, s. den Temperaturabfall der Temperaturverteilungskurve 71 im Abschnitt B, wonach das Argon aus dem Cerium-Reaktor 63 mit einer unter T_{F} liegenden Temperatur austritt. Der zweite Wärmespeicher 62 wird schliesslich durch das eintretende Argon erwärmt, so dass die Temperaturverteilungskurve 77 im Abschnitt C eine Flanke aufweist, s. dazu die Beschreibung zu Figur 3, insbesondere Diagramm 34, Kurve 35. Es ergibt sich, dass die im Wärmespeicher 61 gespeicherte Wärme zur Erwärmung des Reaktors 63 genutzt wird, aber auch zur Beladung des Wärmespeichers 62 dient.

Es ergibt sich weiter, dass die durch den Cerium-Reaktor 63 hindurchwandernde Welle W diesen gewissermassen "nicht sieht" (mit Ausnahme des Temperaturabfalls aufgrund des Wärmetauschs des Argons mit dem Reaktor 63), aber natürlich um die Länge des Reaktors 63 (Abschnitt B) auseinandergerissen wird, wie dies die Temperaturverteilungskurve 77 zeigt.

Zusammenfassend ist es so, dass der Startvorgang abgeschlossen ist, sobald die Temperaturverteilung der Temperaturverteilungskurve 77 entspricht: der Reaktor 63 befindet sich auf T_{U}, wobei der erste Wärmespeicher 61 derart mit einer Welle W beladen ist, dass der Reaktor 63 durch diese auf T_{B} gebracht und anschliessend wieder auf T_{U} gekühlt werden kann. Der Reaktor 63 befindet sich mit anderen Worten im Punkt P_{U} des Diagramms 20 von Figur 2.

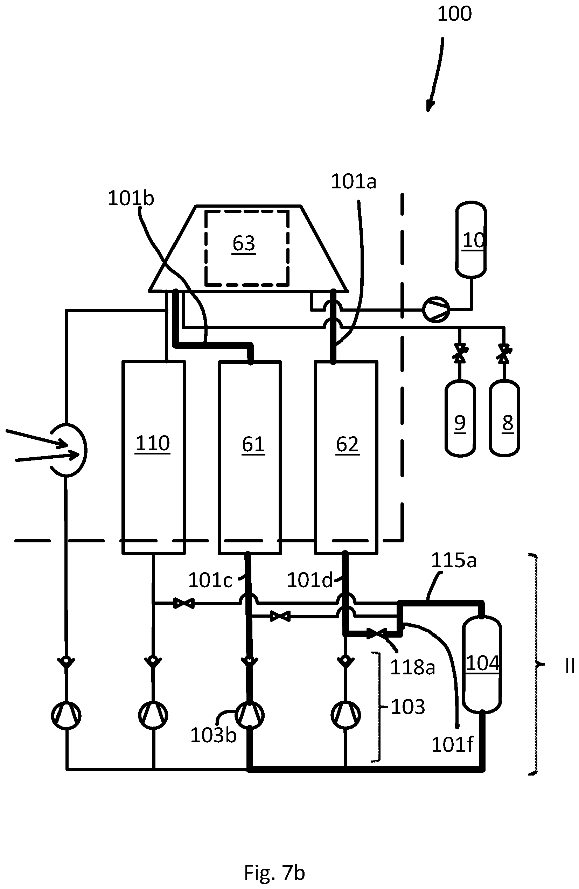

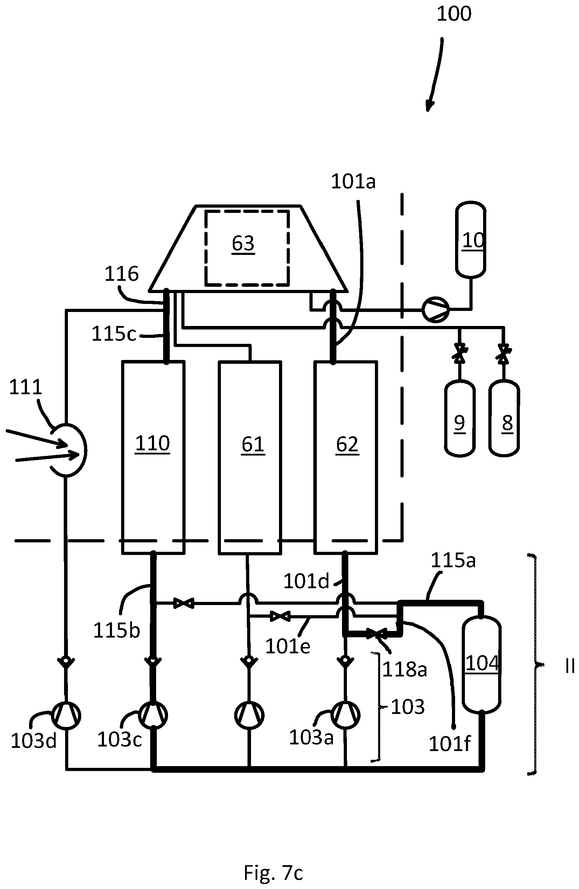

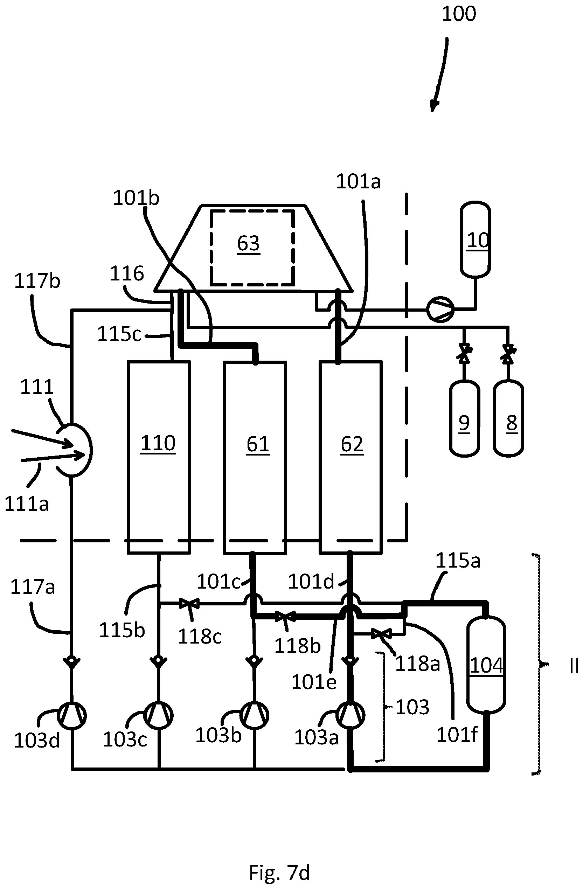

Diagramm 72 zeigt die Temperaturverteilungskurve 78 später, zur Zeit t₁₁, wobei die Welle W soweit in den Cerium-Reaktor 63 eingewandert ist, dass dieser von Argon mit der oberen Temperatur T_{B} durchströmt wird. Der Cerium-Reaktor ist damit auf eine Temperatur T_{R} (Figur 2) nahe der oberen Temperatur T_{O} gebracht worden und befindet sich im Punkt P_{R} von Diagramm 20, Figur 2. Gemäss der Beschreibung zu den Figuren 1 und 2 wird der Cerium-Reaktor 63 danach bevorzugt durch die Wärme von Sonneneinstrahlung auf T_{O} (d.h. zum Punkt P_{O} im Diagramm 20) gebracht, s. dazu die Beschreibung unten zu den Figuren 6 und 7.

Diagramm 73 zeigt die Temperaturverteilungskurve 79 zur Zeit t₁₂, wobei die Welle W zwischen der Zeit t₁₁ und t₁₂ weiter durch den Cerium-Reaktor 63 hindurch gewandert ist, so dass nun ihre nachfolgende, fallenden Flanke diesen durchläuft und der Kamm der Welle W in den zweiten Wärmespeicher 62 eingewandert ist. Solange die nachfolgende Flanke der Welle W durch ihn hindurchläuft, gibt der Cerium-Reaktor 63 laufend Wärme an das Argon ab, da dieses der fallenden Flanke entsprechend trotz dem laufenden Wärmeverlust des Reaktors 63 stets kühler ist als der ihr gegenüber verzögert Wärme verlierende Cerium-Reaktor.

Wiederum ist Differenz der aktuellen Temperatur des Argons und des Reaktors 63 klein. Zur Zeit t₁₂ befindet sich der Reaktor 63 im Punkt P_{KE} von Diagramm 20, Figur 2. Für die Re-Oxidation des Ceriums, und der damit verbundenen Abkühlung des Reaktors 63 auf T_{U} (Punkt P_{U} im Diagramm 20, Figur 2) kann die Strömung des Argon gestoppt werden.

Danach erfolgt die Umschaltung der Strömungsrichtung nach links in Richtung des unteren Pfeils, d.h. von der Leitung 65b zur Leitung 65a, worauf sich die Welle W nach links bewegt und den Reaktor 63 beim Durchgang durch die vorangehende, ansteigende Flanke wiederum erwärmt und anschliessend durch die nachfolgende, abfallende Flanke abkühlt.

Diagramm 74 zeigt die Temperaturverteilungskurve 80 zur Zeit t₁₄, wobei die Welle W soweit durch den Cerium-Reaktor 63 hindurchgelaufen ist, dass dieser nach der Erwärmung auf T_{R}(und durch externe Wärme auf T_{O}, s. Diagramm 20, Figur 2) wieder auf T_{KE} gekühlt und die entsprechende Wärme im Wärmespeicher 61 gespeichert ist.

Zusammenfassend ist es so, dass nach einem Startvorgang gemäss Diagramm 70 das Prozessystem 60 eine Temperaturverteilung nach Diagramm 71 aufweist, die Welle W dann in einer Strömungsrichtung (hier: nach rechts) durch den Reaktor 63 hindurchgeschickt wird, so dass die Temperaturverteilung gemäss Diagramm 73 vorliegt, und von dort aus die Welle W dann in der anderen Strömungsrichtung (hier: nach links)durch den Cerium-Reaktor 63 zurückgeschickt wird, bis die Temperaturverteilung gemäss Diagramm 74 vorliegt, welche den Ausgangspunkt für einen neuen Zyklus bildet, d.h. wieder in der einen Strömungsrichtung zum Zustand nach Diagramm 73 und dann zurück in der anderen Strömungsrichtung zum Zustand nach Diagramm 74, und so fort, so lange, wie der Prozess laufen soll. Ausgehend von der Mitte des Reaktors 73 bewegt sich die Welle W in symmetrisch gelegene Endpositionen in den Wärmespeichern 61 und 62. Nach dem Startvorgang erstreckt sich die Welle W über die Länge L_{SYM} vom Cerium-Reaktor 63 her in die beiden Wärmespeicher 61,62 bzw. Abschnitte A und C hinein, s Diagramm 74 in Verbindung mit Diagramm 73. Das bedeutet, dass im laufenden Betrieb die beiden Wärmespeicher an ihren äusseren, bei den Mündungen 65a und 65b gelegenen Abschnitte stets auf der Umgebungstemperatur T_{UG} und damit kalt bleiben, während im Inneren des Prozesssystems ein zyklischer Wärmetausch zwischen dem Reaktor 63 und den Wärmespeichern 61,62 durch die gemäss den Diagrammen 73,74 fortlaufend hin- und her schwingende Welle W stattfindet.

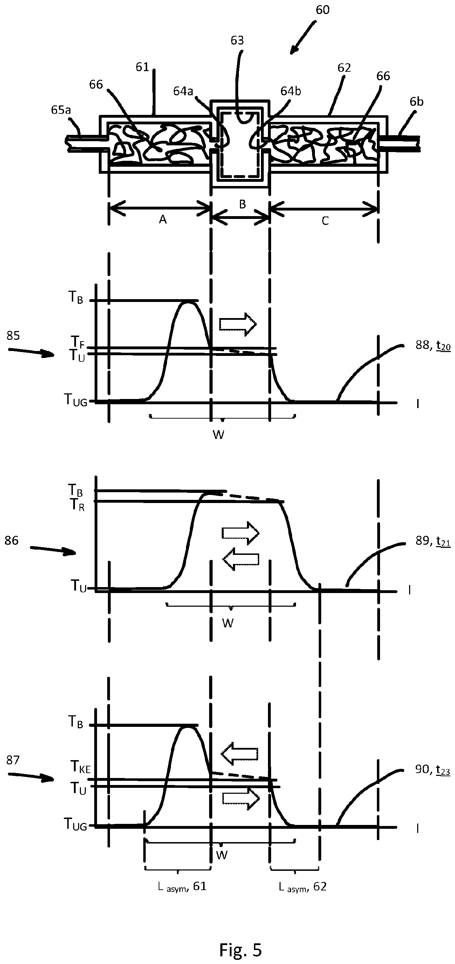

Figur 5 zeigt eine weiteren Ausführungsform der Erfindung, bei welcher der Prozess nicht symmetrisch (Figur 4), sondern asymmetrisch ausgeführt wird, indem die durch den Reaktor 63 nach rechts hindurchlaufende Welle W bereits bei der Temperaturverteilung gemäss Diagramm 72 (Figur 4) gestoppt wird. Zur Erläuterung zeigt Figur 5 solch eine Sequenz mit den Diagrammen 85 bis 87 die den Diagrammen 71, 72 und 74 von Figur 4 entsprechen, d.h. deren Temperaturverteilungskurven 88 bis 90 (zu den Zeiten t₂₀ bis_t₂₃) gleich sind wie die Temperaturverteilungskurven 77, 78 und 80. Geändert ist jedoch wie erwähnt der Zeitpunkt der Umschaltung der Strömungsrichtung, der erfolgt, wenn gemäss Diagramm 86 die Temperaturverteilung nach der Kurve 89 vorliegt.

Damit erfolgt die Erwärmung des Reaktors 63 ausgehend vom Zustand gemäss Diagramm 85 bis zu demjenigen vom Diagramm 86 und die Abkühlung nach der Umschaltung der Strömung ausgehend vom Zustand gemäss Diagramm 86 bis zu demjenigen nach Diagramm 87, worauf der Zyklus neu beginnt. Entsprechend dringt die hin- und her schwingende Welle W weniger weit in den zweiten Wärmespeicher 62 ein, als dies beim ersten Wärmespeicher 61 der Fall ist, womit ihre Endpositionen nicht mehr symmetrisch, sondern asymmetrisch liegen. Die entsprechenden Längen L_{ASYM} sind in Diagramm 87 in Verbindung mit Diagramm 86 eingetragen. Es folgt, dass der zweite Wärmespeicher 62 vorteilhaft kürzer ausgebildet werden kann, als dies bei der Ausführungsform gemäss Figur 4 der Fall ist, während dem natürlich die beiden äusseren Enden der Wärmespeicher 61,62 bei den Mündungen 65a und 65b ebenfalls stets auf der Umgebungstemperatur T_{UG} und damit kalt bleiben.

Die Wärmeverluste bei dem anhand der Figuren 4 und 5 beschriebenen Wärmetausch sind gering, der Wirkungsgrad der so erreichten Rekuperation von Wärme hoch. Weiter kann der Fachmann in Verbindung mit der Beschreibung zu Figur 2 die Schaltzeiten der Strömung für den konkreten Fall im Hinblick auf einen beliebigen Prozess mit zyklisch wechselnder Temperatur ohne Weiteres festlegen. Insbesondere kann der Fachmann durch die Steilheit der Flanken der Welle W und deren Geschwindigkeit durch den Reaktor 63 hindurch die Temperaturdifferenz bestimmen, welcher der Reaktor bei der Erwärmung bzw. Kühlung ausgesetzt ist, was umgekehrt auch ermöglicht, diesen nur für vorbestimmt kleine Temperaturdifferenzen auszulegen bzw.

Bei der in den Figuren 4 und 5 beschriebenen Ausführungsform des Prozesssystems 60 besitzen zusammenfassend der erste 61 und der zweiter Wärmespeicher 62 eine Wärme speichernde Füllung aus Schüttgut 66, wobei bevorzugt das Wärme transportierende Medium ein Gas ist, besonders bevorzugt Argon. Weiter ist es so, dass die Wärmespeicher 61 und 62 an ihrer vom Reaktor 63 abgewandten Seite (bei den Mündungen 65a und 65b) im Betrieb stets auf der Umgebungstemperatur T_{UG} laufen, während ihre dem Reaktor 63 zugewandten Seiten bei den Leitungsabschnitten 64a und 64b (nach dem Startvorgang) stets auf erhöhten Temperaturen zwischen T_{U} und T_{B}, der Spitzentemperatur der (hin- und her schwingenden) Welle W.

Entsprechend weisen der erste Wärmespeicher (61) und der zweite Wärmespeicher (62) im Betrieb jeweils eine kalte Seite auf, wobei bevorzugt ein zweiter Abschnitt (II) der Leitungsanordnung (L) vorgesehen ist, der diese kalten Seiten miteinander verbindet. Die kalten Seiten können auch bei weggelassenem zweitem Abschnitt II mit der Umgebung oder auch mit anderen Systemen verbunden sein, wie dies bei einer zu Figur 1 beschriebenen Ausführungsform der Fall ist. An dieser Stelle sei angefügt, dass im realen Betrieb sich die kalten Seiten über die Zeit leicht erwärmen können. Der Fachmann kann dann für den konkreten Fall eine Kühleinheit für das Wärme transportierende Medium im zweiten Abschnitt II der Leitungsanordnung L vorsehen, wenn dies notwendig sein sollte, oder auch das Prozesssystem so auslegen, dass es bei den im Solarbetrieb auftretenden Unterbrüchen (Nacht) auskühlen kann.

In den Figuren 4 und 5 ist weiter ersichtlich, dass die Wärmespeicher 61,62 über die Leitungen 64a und 64b miteinander verbunden sind (Abschnitt I der Leitungsanordnung L), während gemäss Figur 1 alle notwendigen Schaltorgane für den Betrieb des Prozesssystems wie beispielsweise die Pumpenanordnung 15 im zweiten Abschnitt II der Leitungsanordnung L vorgesehen werden können - mit dem Vorteil, dass die Schaltorgane auf der kalten Seite angeordnet sind, damit frei von hohen Temperaturen, und entsprechend konstruktiv einfach ausgelegt werden können. Auf der heissen Seite, die je nach Anwendung auf Temperaturen über 1300 °K oder 2300 °K oder mehr liegen kann, genügen einfache Rohrverbindungen wie z.B. Keramikrohre. Es folgt, dass bevorzugt dass im zweiten Abschnitt der Leitungsanordnung Schaltorgane für den Betrieb des ersten und des zweiten Abschnitts der Leitungsanordnung angeordnet sind. Besonders bevorzugt ist dabei der erste Leitungsabschnitt frei von Schaltorganen für den Betrieb des Prozessystems. Die Wärmespeicher 60, 61 müssen mit einer minimalen Länge ausgebildet werden, damit ihre kalte Seite im Betrieb die Umgebungstemperatur T_{UG} nicht übersteigt. Grafisch ist diese minimale Länge in den Figuren 4 und 5 durch für jeden Wärmespeicher 60,61 durch eine ihm zugeordnete Länge L_{SYM} oder L_{ASYM} dargestellt - es handelt sich um diejenigen Strecken in den Abschnitten A und C, die die Welle W benötigt, um hin- und her zu wandern. Die Längen L_{SYM} und L_{ASYM} des Wärmespeichers 61 bei den Ausführungsformen gemäss den Figuren 4 und 5 sind gleich gross, während die Längen L_{ASYM} des Wärmespeichers 62 in Figur 5 aufgrund der weniger weit in den Wärmespeicher 62 eindringenden Welle W kleiner ist als L_{SYM} des Wärmespeichers 62 in Figur 4.

Es ergibt sich, dass der Fachmann die Länge der Wärmespeicher in der Ausführungsform gemäss Figur 4 auf minimal L_{SYM} bemessen kann, und bei einer Ausführungsform gemäss Figur 5 die Länge des einen Wärmespeichers (hier des zweiten Wärmespeichers 62) noch einmal auf L_{ASYM} kürzen kann, was eine günstigere Herstellung erlaubt.

An dieser Stelle sei noch hervorgehoben, dass die kalte Seite der Wärmespeicher für die meisten Anwendungen auf der Umgebungstemperatur T_{UG} liegen. Je nach dem konkreten Fall kann es aber angezeigt sein, dass die kalten Seiten, d.h. die von der Prozesseinheit abgewandten Seiten der Wärmespeicher im Betrieb auf einer höheren Temperatur liegen, beispielsweise bis 400 °K oder noch darüber - wenn etwa das Wärme transportierende Fluid noch in an dem Prozesssystem angeschlossenen, anderen Systemen umläuft oder seinerseits im Wärmetausch mit solchen anderen Systemen steht. Vorliegend wird aber stets der Begriff "kalte Seite" zur Unterscheidung von der warmen Seite der Wärmespeicher verwendet. Der Fachmann kann für den Betrieb mit einer kalten Seite, die über der Umgebungstemperatur T_{UG} liegt, einen spezifisch konzipierten Startvorgang vorsehen - das in den Figuren 3 bis 5 beschriebene, erfindungsgemässe Arbeitsprinzip ändert dadurch nicht.

Aus der vorangegangenen Beschreibung zu den Figuren 1 bis 5 und auch nach den in den Figuren 6 bis 8 beschriebenen Ausfürhungsformen ergibt sich weiter ein Verfahren zum zyklischen Erwärmen und Kühlen einer Prozesseinheit 2, die zwischen einer oberen und einer unteren Temperatur betreibbar ist, dadurch gekennzeichnet, dass die Prozesseinheit betriebsfähig zwischen einem ersten 3 und einem zweiten Wärmespeicher 4 geschaltet ist,
- wobei der erste 3 und der zweite 4 Wärmespeicher in einem beladenem Zustand Wärme im Bereich der oberen Temperatur abgeben und die Temperatur während einer Entladung der unteren Temperatur zustrebt,
- wobei der erste 3 und der zweite 4 Wärmespeicher während einer Beladung zuerst mit Wärme im Bereich der unteren Temperatur und dann im Bereich der oberen Temperatur beladbar sind, und
- wobei durch einen zyklischen Wechsel der Strömungsrichtung eines durch den ersten 3 und den zweiten Wärmespeicher 3 - und damit durch die Prozesseinheit 2 - strömenden Wärme transportierenden Mediums diese Prozesseinheit 2 im Wechsel zwischen der oberen Temperatur und der unteren Temperatur hin- und hergebracht wird.

Dabei wird bevorzugt eine Strömungsrichtung vor der zyklischen Umkehrung beibehalten, bis die Prozesseinheit 2 von der unteren Temperatur aus auf eine Rekuperationstemperatur erwärmt und nachfolgend wieder auf die untere Temperatur abgekühlt ist (s. die Ausführungsform gemäss Figur 4).

Weiter bevorzugt werden die Wärmespeicher mit einer wellenförmigen Temperaturschichtung betrieben, die eine Welle W ausbildet. Besonders bevorzugt wird der Wechsel der Strömungsrichtung derart getaktet, dass die Welle im fortlaufenden, fortlaufend im symmetrischen Betrieb hin- und her schwingend in beide Wärmespeicher gleich weit hinein- und wieder hinausläuft. Alternativ kann auch der Wechsel der Strömungsrichtung derart getaktet werden, dass die Welle fortlaufend im asymmetrischen Betrieb hin- und her schwingend in den einen Wärmespeicher weniger weit als in den anderen Wärmespeicher, bevorzugt bis zur ihrer Temperaturspitze, hinein und wieder hinausläuft.

Die durch die erfindungsgemäss erreichbaren Vorteile mit einer kalten (und warmen) Seite der Wärmespeicher werden insbesondere realisiert, wenn bevorzugt im Betrieb die Welle W die von der Prozesseinheit agbewandten Seiten der Wärmespeicher nur teilweise erreicht, derart, dass diese Seiten unter einer vorbestimmten Temperatur bleiben, bevorzugt jedoch nicht erreicht, derart, dass diese Seiten kalt bleiben.

Schliesslich kann der Fachmann auch die Strömung derart auf die Prozesseinheit abstimmen, dass eine aktuelle Temperaturdifferenz zwischen dem durch diese durchströmenden Wärme transportierenden Medium und der Prozesseinheit einen vorbestimmten Wert nicht überschreitet.

Bei all den gezeigten Ausführungsformen kann die Prozesseinheit als direkt oder indirekt beleuchteter Solarreaktor ausgebildet ist.

Figur 6 zeigt ein Schema eines Prozessystems 100, bei welchem die externe Wärme, hier Solarenergie, zwischen den Punkten P_{R} und P_{O} im Diagramm 20 von Figur 2 indirekt, d.h. ohne direkte Beleuchtung der Prozesseinheit 2 (Figur 1) durch die Sonne eingebracht wird.

Dargestellt ist eine wiederum als Cerium-Reaktor 63 ausgebildeten Prozesseinheit, in welchen die für den Transport des Wärme transportierenden Mediums und aller Reaktionspartner benötigten Leitungen betriebsfähig münden. Ersichtlich sind Leitungen 101a und 101b eines erster Abschnitts I einer Leitungsanordnung L, sowie ein zweiter Abschnitt II der Leitungsanordnung L mit einer Pumpenanordnung 103 mit Pumpen 103a und 103b, die je mit einem Rückschlagventil versehen sind, sowie einem Tank 104 für das Wärme transportierende Medium, hier wiederum Argon. Ebenfalls ersichtlich sind der CO₂-Tank 8, der H₂O-Tank 9 und der Syngas-Tank 10 (s. dazu die Beschreibung zu Figur 1). Ein erster Wärmespeicher 61 und ein zweiter Wärmespeicher 62 sind entsprechend der in der Figur 4 gezeigten Ausführungsform ausgebildet. Soweit, und abgesehen von der direkten Beleuchtung des Reaktors 63 durch die Sonne 7 (Figur 1) entspricht das Prozesssystem 100 demjenigen von Figur 1.

Hinzu kommen nun aber noch ein dritter Wärmespeicher 110 und ein Solar-Reciever 111 für Sonnenstrahlen 111a, die beide in den Kreislauf für das Wärme transportierende Medium geschaltet werden können, wobei der Receiver 111 und der Wärmespeicher 110 ausgebildet sind, Wärme mit wenigstens der oberen Temperatur T_{O} zu erzeugen bzw. zu speichern. Bevorzugt ist der dritte Wärmespeicher 110 als geschichteter Wärmespeicher gemäss Figur 3 ausgebildet und wird entsprechend Diagramm 40 von Figur 3 beladen und entladen. Er ist weiter ist im zweiten Abschnitt der Leitungsanordnung L über die Leitungen 115a und 115b (dort via Pumpe 103c) mit dem Argontank 104 und über die Leitung 115c mit einem als Leitung 116 ausgebildeten Zufluss zum Reaktor 63 verbunden. Der Solar-Receiver 111 ist seinerseits über die Leitung 117a (via Pumpe 103d) mit dem Argontank 104 und über die Leitung 117b wahlweise schaltbar mit einerseits der Leitung 116 und anderseits der Leitung 115c verbunden, so dass durch ihn erwärmtes Wärme transportierendes Medium (hier: Argon) entweder direkt in den Reaktor 63 oder in den dritten Wärmespeicher 110 gefördert werden kann, angetrieben durch die Pumpe 103d in der Leitung 117a. Ventile 118a bis 118c bestimmen mit den Leitungen 101c bis 101 f und zusammen mit den den Pumpen 103 a bis 103d zugeordneten Rückschlagventilen die Strömung und den Weg des Wärme transportierenden Mediums im Prozesssystem 100.

Hervorgehoben sei, dass die in der Figur eingezeichnete, gestrichelte Linie im Prozessystem 100 die Grenze bildet zwischen seiner warmen Seite, die den Reaktor 63 einschliesst, und seiner kalten Seite, in welcher alle Schaltorgane wie Ventile und die Pumpenanordnung 103 angeordnet sind. Dabei wird noch einmal die erfindungsgemäss vorteilhafte Anordnung deutlich, welche erlaubt, alle Schaltorgane einfach und kostengünstig im kalten Bereich (bevorzugt Umgebungstemperatur T_{UG}) anzuordnen, während im warmen Bereich, bei Temperaturen zwischen T_{R} und T_{O}, die 1300 ⁰K oder 2300 ⁰K übersteigen können, nur Rohrleitungen für das Wärme transportierende Medium und im Reaktor reagierenden bzw. erzeugten Stoffe vorgesehen werden müssen, die ebenfalls einfach und kostengünstig beispielsweise aus Keramik bestehen können.

Die Leitung 117b bildet einen dritten Abschnitt III und die Leitung 115c einen vierten Abschnitt IV der Leitungsanordnung L.

Damit ergibt sich, dass gemäss der gezeigten Ausführungsform im ersten Abschnitt I der Leitungsanordnung L in Strömungsrichtung vor der Prozesseinheit ein Zufluss 116 für das Wärme transportierende Medium im Bereich der oberen Temperatur angeordnet ist, weiter bevorzugt ein solarer Receiver zur Erwärmung des Wärme transportierenden Mediums vorgesehen ist, wobei ein dritter Abschnitt der Leitungsanordnung den solaren Receiver mit dem Zufluss verbindet, und schliesslich besonders bevorzugt ein dritter Wärmspeicher vorgesehen ist, den ein vierter Abschnitt der Leitungsanordnung mit dem Zufluss verbindet, wobei Wärme aus dem solaren Receiver in diesem dritten Wärmespeicher einspeicherbar ist.

Die Ausführungsform gemäss Figur 6 zeigt, dass für ein beliebiges, Solar betriebenes Prozesssystem der Receiver von der Prozesseinheit (beipsielsweise einem Reaktor für chemische Reaktionen oder einer anderen Einheit für die Verwertung von Wärme) entfernt angeordnet werden kann, entweder in direkter Verbindung zu einer Prozesseinheit des Prozesssystems oder mittelbar über einen dem Receiver zugeordneten Wärmespeicher.

Die Figuren 7a bis 7d zeigen, wie das Prozesssystem 100 für die verschiedenen, in Figur 2 gezeigten Betriebsphasen des Reaktors 63 geschaltet (und auch für die oben beschriebenen Verfahrensschritte betrieben) werden kann, wobei dann die Wärmespeicher 61 und 62 bevorzugt gemäss den Figuren 4 und 5 betrieben werden.

Figur 7a zeigt zeigt einen Schaltzustand des Prozesssystems 100 im Zeitraum t_{O} bis t_{K} bzw. im Zeitraum t_{KE} bis t_{UE} (siehe Fig. 2, Diagramm 20, mit den Punkten P_{O} bis P_{K} und P_{KE} bis P_{UE}), in welchen die Reduktion des Ceriums abgeschlossen ist bzw. die Re-Oxidation stattfindet und damit hier keine Strömung des Wärme transportierenden Mediums durch den Reaktor 63 vorliegt. In diesen Zeiträumen t_{R} bis t_{O} bzw. im Zeitraum t_{KE} bis t_{UE} kann Wärme aus dem solaren Receiver 111 mittels des Wärme transportierenden Mediums (hier: Argon) in den dritten Wärmespeicher 110 eingespeichert werden. Dafür treibt die Pumpe 103d aus dem Tank 104 stammendes Argon durch den Receiver 111, wo es sich mit Wärme belädt, dann durch die Leitungen 117b und 115c in den Wärmespeicher 110, der dadurch mit Wärme beladen wird, und schliesslich, auf Umgebungstemperatur t_{UG} abgekühlt, wieder in den Tank 104. Die so aktiven Leitungen sind in der Figur fett hervorgehoben.

Fig. 7b zeigt einen Schaltzustand des Prozesssystems 100 für eine in den Ausführungsformen der Figuren 4 und 5 nach rechts laufende Strömung, d.h. beispielsweise im Zeitraum t_{U} bis t_{R} bzw. zwischen den Punkten P_{U} bis P_{R} (siehe Fig. 2), in welchem der Reaktor 63 durch rekuperierte, d.h. im ersten Wärmespeicher 61 gespeicherte Wärme erwärmt wird. Zu Beginn liegt in den Wärmespeichern 61,62 die Temperaturverteilung gemäss Diagramm 71 von Figur 4 oder auch Diagramm 85 von Figur 5 vor, je nach der Ausführungsform, gemäss welcher das Prozesssystem betrieben wird. Dafür treibt die Pumpe 103b aus dem Tank 104 stammendes Argon durch den Receiver durch den ersten Wärmespeicher 61, wo es sich mit Wärme belädt, dann durch die Leitung 101b in den Reaktor 63 und von diesem durch die Leitung 101a in den zweiten Wärmespeicher 62, der dadurch mit Wärme beladen wird, und schliesslich, auf Umgebungstemperatur t_{UG} abgekühlt, wieder in den Tank 104. Die so aktiven Leitungen sind in der Figur fett hervorgehoben.

Dieser Schaltzustand liegt aber auch vor, wenn im Zeitraum t_{K} bis t_{KE} bzw. zwischen den Punkten P_{K} bis P_{KE} (siehe Fig. 2) dem zu kühlenden Reaktor 63 Wärme entnommen und für die Rekuperation im Wärmespeicher 62 gespeichert wird, wie dies im Diagramm 73 von Figur 4 dargestellt ist. Dann fliesst aus dem Wärmespeicher 61 in seiner Temperatur fallendes Argon durch den Reaktor 63, wo es dessen Wärme aufnimmt und im Wärmespeicher 62 einspeichert.

Fig. 7c zeigt einen Schaltzustand des Prozesssystems 100 im Zeitraum t_{R} bis t_{O} bzw. zwischen den Punkten P_{R} bis P_{O} (siehe Fig. 2), in welchem der Reaktor 63 durch die im dritten Wärmespeicher 110 gespeicherte, externe Wärme (hier aus dem Receiver 111) auf die obere Temperatur T_{O} gebracht wird. Wie bereits oben erwähnt, kann der Wärmespeicher 110 auch durch andere Energieformen als Solarenergie beladen werden - auch könnte an Stelle des Receivers 111 eine andere Energiequelle als die Sonne Wärme in das Prozesssystem 100 einbringen.

Dafür treibt die Pumpe 103c aus dem Tank 104 stammendes Argon durch den Wärmespeicher 110, wo es sich mit Wärme belädt, dann durch die Leitungen 115c und 116 in den Reaktor 63 und von diesem durch die Leitung 101a in den Wärmespeicher 62, der dadurch mit Wärme oberhalb von T_{R} beladen wird, und schliesslich, auf Umgebungstemperatur t_{UG} abgekühlt, wieder in den Tank 104. Die so aktiven Leitungen sind in der Figur fett hervorgehoben.

Alternativ kann auch die Pumpe 103d zugeschaltet werden, so dass gleichzeitig durch den Receiver 111 und den dritten Wärmespeicher 110 erwärmtes Wärme transportierendes Fluid durch die Leitung 116 in den Reaktor strömt. Ebenso kann auch nur die Pumpe 103d aktiviert werden, nicht aber die Pumpe 103c, so dass der Schaltzustand des Prozesssystems 100 demjenigen von Figur 1 mit der direkten Beleuchtung des Reaktors durch die Sonne entspricht.

Hervorgehoben sei, dass in Diagramm 73 von Figur 4 bzw. in Diagramm 86 von Figur 5 die Spitzentemperatur der Welle W ohne diese Beladung mit Wärme oberhalb von T_{R} dargestellt ist, da in diese Diagrammen die Verschiebung der Welle W als Ergebnis des Aufbaus des dort gezeigten Prozesssystems 60 diskutiert wird. Bei einem Schaltzustand gemäss Figur 7c eines erfindungsgemässen Prozesssystems erhöht sich aber der Wirkungsgrad noch einmal durch die so rekuperierte externe Wärme. Angemerkt sei auch, dass sich dadurch der geringe, stetige Abfall der Spitzentemperatur der wandernden Welle in den Diagrammen 45 und 50 von Figur 3 vermeiden lässt, so dass die Temperaturen T_{R} und T_{O} tatsächlich über einen beliebig langen Betriebszeitraum konstant bleiben können. Der Fachmann kann im konkreten Fall das Prozesssystem 100 leicht entsprechend auslegen.

Fig. 7d zeigt einen Schaltzustand des Prozesssystems 100 für eine in den Ausführungsformen der Figuren 4 und 5 nach links laufende Strömung, d.h. beispielsweise für eine rücklaufende Welle W gemäss Diagramm 73 von Figur 4 im Zeitraum t_{U} bis t_{R} bzw. zwischen den Punkten P_{U} bis P_{R} (siehe Fig. 2), in welchem der Reaktor 63 durch rekuperierte, d.h. im Unterschied zu Fig. 7b nicht im ersten Wärmespeicher 61, sondern im zweiten Wärmespeicher 62 gespeicherte Wärme erwärmt wird. Die rücklaufende Welle W bewirkt aber auch die Kühlung des Reaktors 73 im Zeitraum t_{K} bis t_{KE} bzw. zwischen den Punkten P_{K} bis P_{KE} (siehe Fig. 2), wobei dem zu kühlenden Reaktor 63 Wärme entnommen und für die Rekuperation nun im Wärmespeicher 61 gespeichert wird.

Dafür treibt die Pumpe 103a aus dem Tank 104 stammendes Argon durch den Wärmespeicher 62, dann durch die Leitung 101a in den Reaktor 63 und von diesem durch die Leitung 101b in den Wärmespeicher 61, und schliesslich, auf Umgebungstemperatur t_{UG} abgekühlt, wieder in den Tank 104. Die so aktiven Leitungen sind in der Figur fett hervorgehoben.

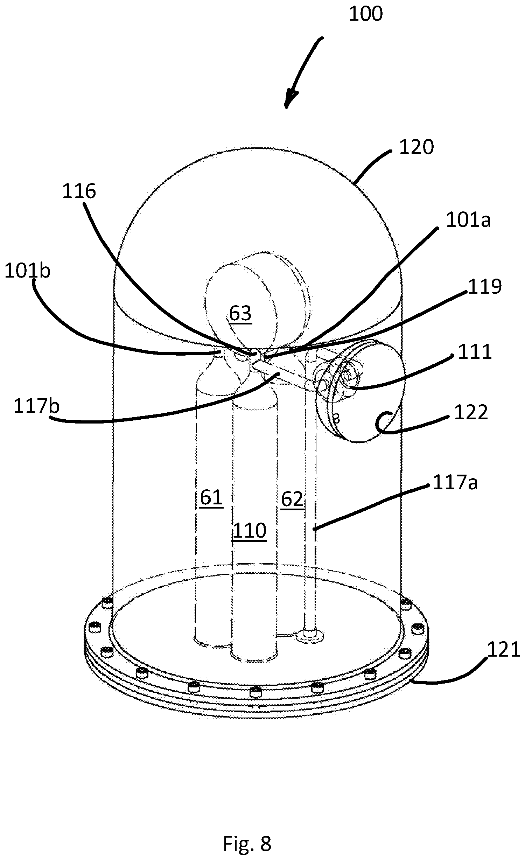

Figur 8a zeigt eine Ansicht der warmen Seite eines realisierten Prozesssystems 100 gemäss dem Schema von Figur 6. Dargestellt ist eine Hülle 120 für die Organe der warmen Seite, sowie ein Anschlussflansch 121 für die Befestigung der Hülle 120 am Einsatzort des Reaktors 63.

In der Figur weggelassen sind der zweite Abschnitt II der Leitungsanordnung L sowie die Tanks 8 bis 10 für CO₂, H₂O und das Syngas-Tank 10, in welchem das Gasgemisch hauptsächlich bestehend aus CO und H₂ als Endprodukte gesammelt wird. Alle diese Komponenten können vom Fachmann im konkreten Fall leicht konzipiert und positioniert werden, da diese nur für den Bereich der Umgebungstemperatur T_{UG} (oder gemäss dem konkreten Fall auch einer anderen, vergleichsweise tiefen Temperatur) ausgelegt werden müssen, und, wie erwähnt, vergleichsweise kostenintensive Hochtemperatur-Schaltorgane bzw. Hochtemperaturpumpen im heissen Bereich der Leitungsanordnung L eingespart werden können.

In der Hülle 2 sind ersichtlich der erste bis dritte Wärmespeicher 61, 62 und 110, der Reaktor 63 und der Receiver 111, der hinter einem in der Hülle 120 vorgesehenen für Sonnenstrahlen transparenten Abschnitt 122 angeordnet ist. Weiter ersichtlich ist die zum Receiver 111 führende Leitung für kaltes Wärme transportierendes Medium 117a, die vom Receiver 111 weg zum Reaktor 63 hin führenden Leitungen 117b und 116, sowie die Leitungen 101a und 101b des ersten Abschnitts I der Leitungsanordnung L. Etwas verdeckt hinter dem Wärmespeicher 110 befindet sich die Leitung 119 vom Reaktor 63 zum hier nicht ersichtlichen Tank 10 für Syngas (Figur 6).

## Patentansprüche

1. Prozesssystem mit einer zwischen einer oberen (T o ) und einer unteren Temperatur (Tu ) betreibbaren, einen Reaktor aufweisende Prozesseinheit (1,60,100), die für einen Prozess mit einem Prozessschritt auf einer oberen Temperatur und für einen anderen Prozessschritt auf einer unteren Temperatur ausgebildet ist, und mit einem ersten Wärmespeicher (3,61) und mit einem zweiten Wärmespeicher (4,62), wobei dem Reaktor bei der Erwärmung in einem oberen Temperaturbereich bis zur oberen Temperatur Wärme von außen zugeführt wird, wobei der erste Wärmespeicher (3,61) und der zweite Wärmespeicher (4,62) durch eine Leitungsanordnung (L) für ein Wärme transportierendes Medium betriebsfähig miteinander verbunden sind, wobei die Prozesseinheit (1,60,100) in einem ersten Abschnitt (I) der Leitungsanordnung (L) zwischen dem ersten (3,61) und dem zweiten Wärmespeicher (4,62) angeordnet ist, **dadurch gekennzeichnet, dass** der erste Wärmespeicher (61) und der zweite Wärmespeicher (62) als geschichtete Wärmespeicher ausgebildet sind, wobei der erste Wärmespeicher (61) und der zweite Wärmespeicher (62) auf der jeweiligen, der Prozesseinheit (60,100) abgewandten Seite mittels einem zweiten Abschnitt (II) der Leitungsanordnung (L) verbunden sind.

2. Prozesssystem nach Anspruch 1, **dadurch gekennzeichnet, dass** der erste Wärmespeicher (61) und der zweite Wärmespeicher (62) eine Wärme speichernde Füllung aus Schüttgut (66) aufweisen und bevorzugt das Wärme transportierende Medium ein Gas ist, besonders bevorzugt Argon.

3. Prozesssystem nach einem der Ansprüche 1 oder 2, **dadurch gekennzeichnet, dass** der erste Wärmespeicher (61) und der zweite Wärmespeicher (62) im Betrieb jeweils eine kalte Seite aufweisen und dass bevorzugt ein zweiter Abschnitt (II) der Leitungsanordnung (L) vorgesehen ist, diese kalten Seiten miteinander verbindet.

4. Prozesssystem nach einem der Ansprüche 1 bis 3, **dadurch gekennzeichnet, dass** im zweiten Abschnitt (II) der Leitungsanordnung (L) eine Kühleinheit für das Wärme transportierende Medium angeordnet ist.

5. Prozesssystem nach einem der Ansprüche 1 bis 4, **dadurch gekennzeichnet, dass** im zweiten Abschnitt (II) der Leitungsanordnung (L) Schaltorgane für den Betrieb des ersten (I) und des zweiten Abschnitts (II) der Leitungsanordnung (L), bevorzugt für die gesamte Prozesseinheit (1, 60, 100) angeordnet sind.

6. Prozesssystem nach einem der Ansprüche 1 bis 5, **dadurch gekennzeichnet, dass** der erste Leitungsabschnitt (I) frei ist von Schaltorganen für den Betrieb des Prozesssystems.

7. Prozesssystem nach einem der Ansprüche 1 bis 6, **dadurch gekennzeichnet, dass** die Prozesseinheit (2) als ein von der Sonne beleuchteter Solarreaktor ausgebildet ist.

8. Prozesssystem nach einem der Ansprüche 1 bis 7, **dadurch gekennzeichnet, dass** im ersten Abschnitt I der Leitungsanordnung (L) in Strömungsrichtung vor der Prozesseinheit (60, 100) ein Zufluss für das Wärme transportierende Medium im Bereich der oberen Temperatur(T o ) angeordnet ist.

9. Prozesssystem nach Anspruch 8, **dadurch gekennzeichnet, dass** ein solarer Receiver (111) zur Erwärmung des Wärme transportierenden Mediums vorgesehen ist, wobei ein dritter Abschnitt (III) der Leitungsanordnung (L) den solaren Receiver (111) mit dem Zufluss verbindet.

10. Prozesssystem nach Anspruch 9, **dadurch gekennzeichnet, dass** ein dritter Wärmspeicher (110) vorgesehen ist, den ein vierter Abschnitt (IV) der Leitungsanordnung (L) mit dem Zufluss verbindet, derart, dass Wärme aus dem solaren Receiver (111) in diesem dritten Wärmespeicher (110) einspeicherbar ist.

11. Verfahren zum zyklischen Erwärmen und Kühlen einer Prozesseinheit (2,63) nach Anspruch 1, die zwischen einer oberen und einer unteren Temperatur betreibbar ist, **dadurch gekennzeichnet, dass** die Prozesseinheit (2,63) betriebsfähig zwischen einem ersten (3) und einem zweiten Wärmespeicher(4) geschaltet ist,
- wobei der erste Wärmespeicher (3) und der zweite Wärmespeicher(4) in einem beladenem Zustand Wärme im Bereich der oberen Temperatur abgeben und die Temperatur während einer Entladung der unteren Temperatur zustrebt,
- wobei der erste Wärmespeicher (3) und der zweite Wärmespeicher(4) während einer Beladung zuerst mit Wärme im Bereich der unteren Temperatur und dann im Bereich der oberen Temperatur beladbar sind, und
- wobei durch einen zyklischen Wechsel der Strömungsrichtung eines durch den ersten Wärmespeichers (3) und den zweiten Wärmespeicher (4) - und damit durch die Prozesseinheit (2) - strömenden Wärme transportierenden Mediums diese Prozesseinheit (2) im Wechsel zwischen der oberen Temperatur und der unteren Temperatur hin- und hergebracht wird.

12. Verfahren nach Anspruch 11, wobei eine Strömungsrichtung vor der zyklischen Umkehrung beibehalten wird, bis die Prozesseinheit (2) von der unteren Temperatur aus auf eine Rekuperationstemperatur erwärmt und nachfolgend wieder auf die untere Temperatur abgekühlt ist.

13. Verfahren nach Anspruch 11, wobei die Wärmespeicher (3,61,4,62) mit einer wellenförmigen Temperaturschichtung betrieben werden, die eine Welle W ausbildet.

14. Verfahren nach Anspruch 13, wobei der Wechsel der Strömungsrichtung derart getaktet wird, dass die Welle fortlaufend im symmetrischen Betrieb hin- und her schwingend in beide Wärmespeicher (3,61,4,62) gleich weit hinein- und wieder hinausläuft.

15. Verfahren nach Anspruch 13, wobei der Wechsel der Strömungsrichtung derart getaktet wird, dass die Welle fortlaufend im asymmetrischen Betrieb hin- und her schwingend in den einen Wärmespeicher weniger weit als in den anderen Wärmespeicher, bevorzugt bis zur ihrer Temperaturspitze, hinein und wieder hinausläuft.

16. Verfahren nach einem der Ansprüche 13 bis 15, wobei im Betrieb die Welle W die vom der Prozesseinheit agbewandten Seiten der Wärmespeicher nicht erreicht, derart, dass diese Seiten kalt bleiben.

17. Verfahren nach Anspruch 12, wobei die Strömung derart auf die Prozesseinheit abgestimmt wird, dass eine aktuelle Temperaturdifferenz zwischen dem durch diese durchströmenden Wärme transportierenden Mediums und der Prozesseinheit einen vorbestimmten Wert nicht überschreitet.

18. Verfahren nach einem der Ansprüche 11 bis 13, **dadurch gekennzeichnet, dass** die Prozesseinheit als direkt beleuchteter Solarreaktor ausgebildet ist.

## Claims

1. Process system having a process unit (1, 60, 100) including a reactor, the system can be operated between an upper (Tₒ) and a lower temperature (Tᵤ) and is adapted for a process with one process step at an upper temperature and with another process step at a lower temperature, the system having a first heat accumulator (3, 61) and a second heat accumulator (4, 62), whereby the reactor is supplied with heat from outside during heating in an upper temperature range up to the upper temperature, whereby the first heat accumulator (3, 61) and the second heat accumulator (4, 62) are operatively connected to one another by a conduit arrangement (L) for a heat-transporting medium, whereby the process unit (1, 60, 100) is arranged in a first section (I) of the conduit arrangement (L) between the first (3, 61) and the second heat accumulator (4, 62), **characterized in that** the first heat accumulator (61) and the second heat accumulator (62) are designed as layered heat accumulators, the first heat accumulator (61) and the second heat accumulator (62) being connected on the respective side facing away from the process unit (60, 100) by means of a second section (II) of the line arrangement (L).

2. Process system according to claim 1, **characterized in that** the first heat accumulator (61) and the second heat accumulator (62) have a heat-storing filling of bulk material (66) and preferably the heat-transporting medium is a gas, particularly preferably argon.

3. Process system according to one of claims 1 or 2, **characterized in that** the first heat accumulator (61) and the second heat accumulator (62) each have a cold side during operation and **in that** preferably a second section (II) of the line arrangement (L) is provided to connect these cold sides to one another.

4. Process system according to one of claims 1 to 3, **characterized in that** a cooling unit for the heat-transporting medium is arranged in the second section (II) of the line arrangement (L).

5. Process system according to one of the claims 1 to 4, **characterized in that** switching elements for the operation of the first (I) and the second section (II) of the line arrangement (L), preferably for the entire process unit (1, 60, 100), are arranged in the second section (II) of the line arrangement (L).

6. Process system according to one of the claims 1 to 5, **characterized in that** the first line section (I) is free of switching elements for the operation of the process system.

7. Process system according to one of the claims 1 to 6, **characterized in that** the process unit (2) is designed as a solar reactor illuminated by the sun.

8. Process system according to any one of claims 1 to 7, **characterized in that** an inflow for the heat-transporting medium in the range of the upper temperature (Tₒ) is arranged in the first section (I) of the line arrangement (L), upstream of the process unit (60, 100).

9. Process system according to claim 8, **characterized in that** a solar receiver (111) is provided for heating the heat transporting medium, wherein a third section (III) of the conduit arrangement (L) connects the solar receiver (111) to the inflow.

10. Process system according to claim 9, **characterized in that** a third heat accumulator (110) is provided, which a fourth section (IV) of the conduit arrangement (L) connects to the inflow, such that heat from the solar receiver (111) can be stored in this third heat accumulator (110).

11. Method for cyclic heating and cooling of a processing unit (2, 63) that is operable between an upper and a lower temperature, **characterized in that** the processing unit (2, 63) is operatively switched between a first (3) and a second heat accumulator (4),
- wherein in a charged state the first (3) and the second (4) heat accumulators give off heat in the upper temperature range and the temperature tends towards the lower temperature during discharge,
- wherein during charging the first (3) and the second (4) heat accumulators can be charged with heat initially in the lower temperature range and subsequently in the upper temperature range, and
- wherein said processing unit (2) is brought alternately to the upper temperature and the lower temperature by cyclically changing the flow direction of a heat transporting medium flowing through the first (3) and the second (4) heat accumulators - and thus also through the processing unit (2).

12. Method according to Claim 11, wherein a flow direction before the cyclic reversal is maintained until the processing unit (2) has been heated from the lower temperature to a recovery temperature and subsequently cooled back down to the lower temperature.

13. Method according to Claim 11, wherein the heat accumulators (3, 61, 4, 62) are operated with a wave-like temperature stratification which forms a wave W.

14. Method according to Claim 13, wherein the change of the flow direction is clocked in such a way that the wave continuously advances into and retreats out of both heat accumulators (3, 61, 4, 62) to the same distance in a continuous, constant propagation in symmetrical operation.

15. Method according to Claim 13, wherein the change of the flow direction is clocked in such a way that the wave advances into one heat accumulator a shorter distance than the other and retreats therefrom in continuous asymmetrical oscillating operation, preferably until the peak temperature thereof.

16. Method according to any one of Claims 13 to 15, wherein the wave W does not reach the sides of the heat accumulators facing away from the processing unit during operation, such that these sides remain cold.

17. Method according to Claim 12, wherein the flow is synchronised with the processing unit in such manner that a current temperature difference between the heat transporting medium flowing through the processing unit and the processing unit does not exceed a predetermined value.

18. Method according to any one of Claims 11 to 13, **characterized in that** the processing unit is designed as a directly illuminated solar reactor.

## Revendications

1. Système de traitement avec une unite de traitement (1, 60, 100) pouvant fonctionner entre une température supérieure (To) et une température inférieure (Tu ), présentant un réacteur, qui est conçu pour un traitement avec une étape de traitement à une température supérieure et pour une autre étape de traitement à une température inférieure, et avec un premier accumulateur de chaleur (3, 61) et avec un deuxième accumulateur de chaleur (4, 62), de la chaleur étant amenée de l'extérieur au réacteur lors du chauffage dans une plage de température supérieure jusqu'à la température supérieure, le premier accumulateur de chaleur (3, 61) et le deuxième accumulateur de chaleur (4, 62) sont relies entre eux de manière opérationnelle par un agencement de conduites (L) pour un milieu transportant de la chaleur, l'unité de traitement (1, 60, 100) étant disposée dans une première section (I) de l'agencement de conduites (L) entre le premier (3, 61) et le deuxième accumulateur de chaleur (4, 62), **caractérisé en ce que** le premier accumulateur de chaleur (61) et le deuxième accumulateur de chaleur (62) sont réalisés sous forme d'accumulateurs de chaleur stratifiés, le premier accumulateur de chaleur (61) et le deuxième accumulateur de chaleur (62) étant relies sur le côté respectif oppose à l'unité de traitement (60, 100) au moyen d'une deuxième section (II) de I'agencement de conduites (L).

2. Système de traitement selon la revendication 1, **caractérisé en ce que** le premier accumulateur de chaleur (61) et le deuxième accumulateur de chaleur (62) présentent un remplissage d'accumulation de chaleur en matériau en vrac (66) et, de préférence, le milieu transportant la chaleur est un gaz, de préférence l'argon.

3. Système de traitement selon l'une des revendications 1 ou 2, **caractérisé en ce que** le premier accumulateur de chaleur (61) et le deuxième accumulateur de chaleur (62) présentent chacun un côté froid en fonctionnement et **en ce qu'**il est prévu de préférence une deuxième section (II) de I'agencement de conduites (L) qui relie ces côtés froids entre eux.

4. Système de traitement selon I'une des revendications 1 à 3, **caractérisé en ce qu'**une unite de refroidissement pour le fluide de transport de chaleur est disposée dans la deuxième section (II) de I'agencement de conduites (L).

5. Système de traitement selon I'une des revendications 1 à 4, **caractérisé en ce que** dans la deuxieme section (II) de I'agencement de conduites (L) sont disposés des organes de commutation pour le fonctionnement de la première (I) et de la deuxième section (II) de I'agencement de conduites (L), de préférence pour l'ensemble de l'unité de traitement (1, 60, 100).

6. Système de traitement selon I'une des revendications 1 à 5, **caractérisé en ce que** le premier tronçon de conduite (I) est dépourvu d'organes de commutation pour le fonctionnement du système de traitement.

7. Système de traitement selon I'une des revendications 1 à 6, **caractérisé en ce que** l'unité de traitement (2) est conçue comme un réacteur solaire éclairé par le soleil.

8. Système de traitement selon I'une des revendications 1 à 7, **caractérisé en ce que** dans le premier tronçon (I) de I'agencement de conduites (L), dans le sens d'écoulement, en amont de l'unité de traitement (60, 100), est disposé un afflux pour le fluide transportant la chaleur dans la zone de la température supérieure (Tₒ).

9. Système de traitement selon la revendication 8, **caractérisé en ce qu'**un récepteur solaire (111) est prévu pour chauffer le fluide caloporteur, une troisième section (III) de I'agencement de conduites (L) reliant le récepteur solaire (111) à l'affluent.

10. Système de traitement selon la revendication 9, **caractérisé en ce qu'**il est prévu un troisième accumulateur de chaleur (110) qu'un quatrième tronçon (IV) de I'agencement de conduites (L) relie à l'affluent, de telle sorte que de la chaleur provenant du récepteur solaire (111) peut être stockée dans ce troisième accumulateur de chaleur (110).

11. Procédé pour chauffer et refroidir de manière cyclique une unite de traitement (2, 63) selon la revendication 1,
▪ qui peut fonctionner entre une température supérieure et une température inférieure, **caractérisé en ce que** l'unité de traitement (2, 63) est connectée de manière opérationnelle entre un premier (3) et un deuxième (4) accumulateur de chaleur,
▪ le premier accumulateur de chaleur (3) et le deuxième accumulateur de chaleur (4) émettant, à l'état chargé, de la chaleur dans la plage de la température supérieure et la température tendant vers la température inférieure pendant une décharge,
▪ le premier accumulateur de chaleur (3) et le deuxième accumulateur de chaleur (4) pouvant être chargés, pendant un chargement, d'abord avec de la chaleur dans la zone de la température inférieure et ensuite dans la zone de la température supérieure, et un changement cyclique de la direction d'écoulement d'un fluide traversant le premier accumulateur de chaleur (3) et le deuxième accumulateur de chaleur (4) permettant d'atteindre la température supérieure.

12. Procédé selon la revendication 11, dans lequel une direction d'écoulement est maintenue avant l'inversion cyclique jusqu'à ce que l'unité de traitement (2) soit chauffée à partir de la température inférieure jusqu'à une température de récupération et soit ensuite refroidie à nouveau jusqu'à la température inférieure.

13. Procédé selon la revendication 11, dans lequel les accumulateurs de chaleur (3, 61, 4, 62) sont exploités avec une stratification de température ondulée qui forme une onde W.

14. Procédé selon la revendication 13, dans lequel le changement de direction d'écoulement est cadencé de telle sorte que I'onde entre et sort de manière continue des deux accumulateurs de chaleur (3, 61, 4, 62) en oscillant dans un sens et dans I'autre en fonctionnement symétrique.

15. Procédé selon la revendication 13, dans lequel le changement de direction d'écoulement est cadencé de telle sorte que I'onde entre et sort en continu en oscillation alternative en mode asymétrique dans un accumulateur thermique moins loin que dans l'autre accumulateur thermique, de préférence jusqu'à son pic de température.

16. Procédé selon I'une quelconque des revendications 13 à 15, dans lequel, en fonctionnement, I'onde W n'atteint pas les côtés de I'accumulateur de chaleur qui sont en regard de l'unité de traitement, de sorte que ces côtés restent froids.

17. Procédé selon la revendication 12, dans lequel le flux est adapté à l'unité de traitement de telle sorte qu'une différence de température réelle entre le fluide caloporteur qui le traverse et l'unité de traitement ne dépasse pas une valeur prédéterminée.

18. Procédé selon I'une des revendications 11 à 13, **caractérisé en ce que** l'unité de traitement est conçue comme un réacteur solaire à éclairage direct.
